# EUROPEAN PATENT APPLICATION

(11) **EP 2 779 092 A1**
(43) Date of publication of application: **17.09.2014**
(21) Application number: 14159087.7
(22) Date of filing: 12.03.2014
(51) Int. Cl.: G06T 7/00, G01B 11/25

(54) **Apparatus and techniques for determining object depth in images**

(30) Priority: 12.03.2013 US 201313797885
(71) Applicant: Intel Corporation, Santa Clara, CA 95054 (US)
(72) Inventor: Aviv, Ziv, 42842 Bat Hefer (IL); Stanhill, David, 17915 Hoshaya (IL)
(74) Representative: Jansen, Cornelis Marinus

(57) **Abstract**

An apparatus may include an emitter to project a low resolution optical pattern and a high resolution optical pattern having a finer resolution than the low resolution optical pattern and a sensor to detect a composite image, where the composite image comprises a low resolution optical reflection pattern comprising reflection of the projected low resolution optical pattern and a high resolution optical reflection pattern comprising a reflection of the projected high resolution optical pattern. The apparatus may also include logic to determine object depth in a first depth range and object depth in a second depth range based upon the detected composite image. Other embodiments are disclosed and claimed.

## Description

### TECHNICAL FIELD

Embodiments described herein generally related to electronic imaging and in particular to active depth camera technology.

### BACKGROUND

Recently, electronics devices have been developed to measure depth of objects in a field of view. Such depth information is used in applications such as gaming devices, scanners, and three dimensional (3-D) printers. In some applications such as those dependent on gesture recognition, the depth information for objects in a scene may provide more valuable data than that obtained by a conventional Red-green-blue (RGB) image recorded of the scene. A common method to determine object depth is generally known as "structured light" and involves projecting a pattern of light onto objects in a scene, and extracting depth information by analyzing light reflected when the pattern of light is intercepted by objects. The emitter typically projects visible range or infrared (IR) radiation onto the objects, which is reflected and captured by a sensor.

In some scenarios, when a user interacts with an electronic device such as a computing device, communications device, stand-alone camera or other device that includes a depth measuring camera, the depth of interest typically lies in the range of about 10 cm to 150 cm from a camera. Design of an appropriate optical system to operate in such a range is difficult for several reasons. To extract depth images of objects, such as human body, in the required ranges the depth of field of both a camera and emitter should be in this range of 10 cm to 150 cm. However it is a known property of optical lenses that for short ranges the depth of field is much shorter.

Accordingly, there may be a need for improved techniques and apparatus to solve these and other problems.

### BRIEF DESCRIPTION OF THE DRAWINGS

FIG. 1 depicts an embodiment of a structured light component.
FIG. 2 depicts an embodiment of a structured light system.
FIG. 3 depicts another embodiment of a structured light component.
FIG. 4 depicts another embodiment of a structured light system.
FIG. 5 depicts a further embodiment of a structured light system.
FIG. 6A depicts one embodiment of an optical pattern.
FIG. 6B depicts another embodiment of an optical pattern.
FIG. 7 depicts one use scenario for operating a structured light system.
FIG. 8 depicts exemplary light patterns produced by a structured light component.
FIG. 9 shows still another embodiment of a structured light component.
FIG. 10 shows an exemplary first logic flow.
FIG. 11 shows and exemplary second logic flow.
FIG. 12 illustrates an exemplary system architecture.

### DETAILED DESCRIPTION

Embodiments are related to apparatus and techniques for determining depth information over a range of distances or depths, and in particular over a range of about 10 cm to 150 cm from a camera or sensor. In various embodiments a structured light component is constructed to include an emitter system or emitter component that includes one or more emitters that are designed to emit in aggregate multiple optical patterns. In some embodiments, the emitter system includes multiple emitters in which the emitter design differs between emitters. In particular, a first emitter may be designed to generate an optical pattern that is useful over a first depth range while a second emitter may be designed to generate an optical pattern useful over a second depth range.

The present embodiments therefore provide a solution to the lack of accurate depth meas-urement capability over a range from about 10 cm to 150 cm distance from a camera, in present day depth sensing (or "active depth") cameras. In particular, some embodiments overcome the problems of determining image depth caused by interaction of depth sensing cameras with human features. As an example, a source of degradation for patterns captured by depth sensing cameras at close range is the translucency of human skin, which blurs fine details of light falling on the skin. When the object is close to the emitter that emits the pattern to reflect off an object, the size of the pattern details falling on the hand are relatively small and are strongly blurred by the skin translucency.

Because the number of features falling on an object is a function of the object distance from the camera, a coarse pattern may provide sufficient depth resolution for close-in objects. However, such a coarse pattern provides low resolution depth information of more distant objects.

Another source of blur is out-of-focus blur that depends upon object distance. Notably, the severity of degradation caused by out-of-focus blur is a function of the lens used to image the object. In conventional approaches, it is possible to construct a lens having minor degradation when objects are out of focus; however, such lenses require a small aperture that reduces the amount of light entering the lens to the extent that high signal power is required to generate a light pattern to be imaged.

The present embodiments overcome these problems by providing an approach that generates a coarser pattern to be analyzed for objects close to an emitter, which suffers less blurring from objects such as human skin. At the same time a finer pattern is projected to provide the ability to analyze depth from objects further from an emitter. This approach provides the advantage that object depth information over different object distances (or depths) from a structured light console or component can be obtained at the same time. Moreover, a further advantage is that the depth information may be obtained without reduction frame rate of a recording device or sensor that records optical patterns as detailed below with respect to the figures to follow. The multiple pattern design of the present embodiments provides the further advantage that a sensor to capture the multiple patterns may employ a lens with a large aperture, thus reducing the power required for emitted signal(s) that create the multiple patterns.

In some embodiments a structured light component includes in addition to a sensor, an emitter system having an extended depth of field that is generated by the projection of a composite optical pattern that is composed of two or more optical patterns. The term "depth of field" as used herein refers to a depth range within which the depth of objects from a sensor can be accurately determined. In some embodiments, an emitter system may include a first emitter designed to project a low resolution optical pattern from which object depth may be extracted for objects illuminated by the low resolution optical pattern that lie in the range of about 10 cm to 50 cm from the sensor. The emitter system of the structured light component may include a second emitter designed to project a high resolution optical pattern from which object depth may be extracted for objects illuminated by the high resolution optical pattern that lie in the range of about 50 cm to 150 cm from the sensor. The low resolution and high resolution optical patterns may be prestored as reference patterns. When the low resolution and high resolution optical patterns are projected onto objects within a range of about 10 cm to 150 cm, the reflection from such objects may be detected by the sensor and used to determine object depth over such a depth range as detailed below. In various embodiments the depth of field associated with different optical patterns projected from an emitter system may overlap such that object depth information may be extracted from reflection of a first optical pattern, second optical pat-tern or both. In various other embodiments, the structured light component may be designed to project three or more optical patterns that are each designed for extraction of depth information from a different depth range. The three or more optical patterns may be generated by one or more emitters in accordance with various embodiments. The embodiments are not limited in this context.

Various embodiments may comprise one or more elements. An element may comprise any structure arranged to perform certain operations. Some elements may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

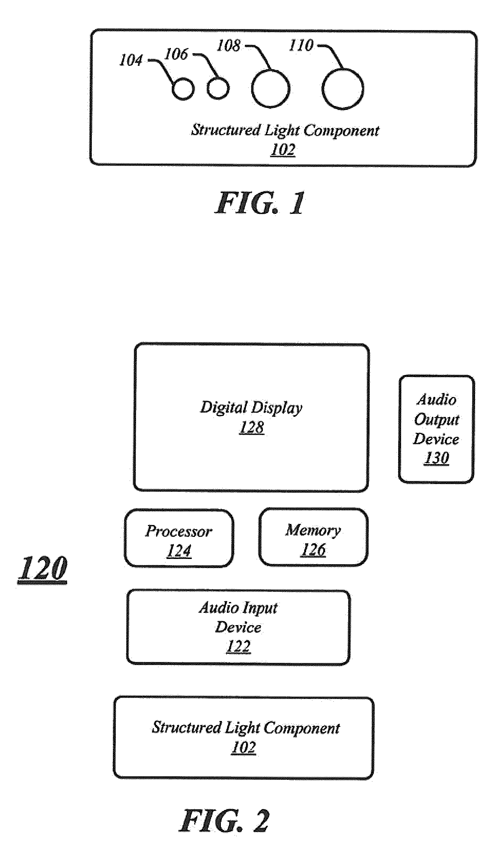

FIG. 1 depicts features of a structured light component 102 consistent with various em-bodiments. The structured light component 102 includes a first emitter 104 and second emitter 106, a visible light red-green-blue (RGB) camera 108, and depth sensor 110. In some embodiments the first emitter 104 is designed to emit a high resolution optical pattern and the second emitter 106 is designed to emit a low resolution optical pattern. The terms "optical" and "light" as used herein generally refer to electromagnetic radiation that may be in the range visible to humans as well as infrared (IR) radiation. An "optical pattern" therefore represents a pattern of electromagnetic radiation generated by a source such as an emitter. In various embodiments, such an optical pattern comprises small regions such as points or rectangles of light that are isolated from one another. The optical pattern may form an array of illuminated regions that is designed to intercept and reflect from objects within an angular range of an emitter. In some embodiments, the optical pattern may comprise elongated elements including curves or lines. The embodiments are not limited in this context.

Except as otherwise noted, the optical patterns generated by an emitter of the present em-bodiments may be produced generally in accordance with known techniques. For example, the low resolution and/or high resolution optical patterns generated by emitters 104, 106 may be each produced by a laser beam designed to generate the appropriate light wavelength, such as IR or visible wavelengths. The laser beam may be directed through one or more optical elements (not shown) that interact with the laser beam to produce a pattern of light regions within a relatively darker matrix. These light regions may intercept objects as a pattern of light dots, squares, rectangles, lines, a combination of the above, and so forth. In some embodiments, the number of light regions produced by the emitters 104, 106 may number in the thousands or tens of thousands.

Consistent with the present embodiments, the sensor 110 may be arranged to detect light reflected from objects that are illuminated by optical patterns generated by the emitters 104, 106. In some embodiments, the sensor 110 includes a two-dimensional array of sub-sensors or sensor elements arranged according to known technology. In this manner, and as detailed below, an optical pattern reflected from objects illuminated by the emitters 104, 106 may be detected as a two dimensional light pattern whose exact arrangement provides information regarding the depth of the objects.

In various embodiments, the structured light component 102 may be deployed in different systems to provide dynamic input regarding object depth. FIG. 2 depicts an exemplary system 120 that includes the structured light component 102, an audio input device 122, processor 124, memory 126, digital display 128 and audio output device 130. In operation, the structured light component 102 may be used in conjunction with other devices, such as audio input device 122, to provide input that includes object depth information, the results of which are presented by the digital display 128 and/or audio output device 130.

In various embodiments the processor 124 and/or memory 126 may be located within the structured light component 102 or alternatively may be separate from the structured light component 102. Referring also to FIG. 1, the processor 124 may include logic to process input from memory 126 and from sensor 110 in order to extract depth information from objects illuminated by the emitters 104, 106. Examples of determining depth information using multiple optical patterns having different resolution are set forth with respect to the FIGs. to follow.

In particular, in various embodiments the processor 124 may comprise various hardware elements, software elements, or a combination of both. Examples of hardware elements may include devices, components, processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Examples of a digital display 128 include a liquid crystal display (LCD), light emitting diode display (LED), touch sensitive display, plasma display, cathode ray tube, and other display types. In various embodiments, the system 100 may include various input devices (not shown) including, but not limited to, keyboards, keypads, mouse, joystick, touchscreen, or other input devices.

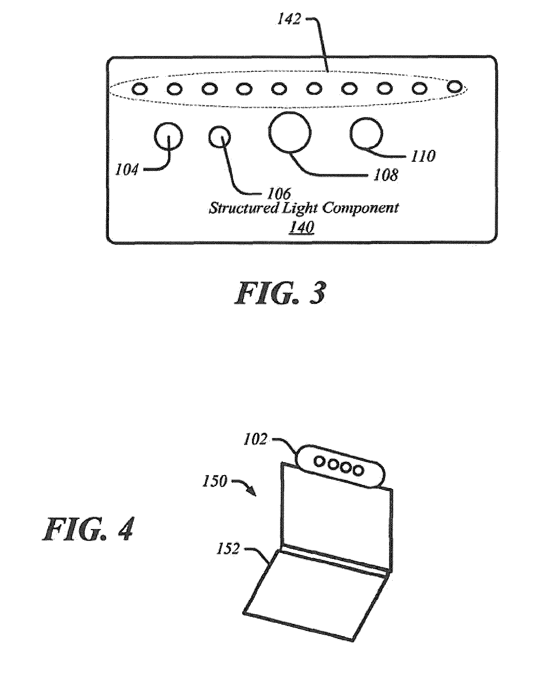

FIG. 3 presents a variant of a structured light component 140 in which audio input devices are included within a common housing with optical emitters and a sensor. In this embodiment, an array of microphones 142 is collocated in the structured light component 140 together with emitters 104, 106 and sensor 110.

FIG. 4 presents a system 150 that includes the structured light component 102, which is communicatively coupled to a computing device 152. Consistent with the present embodiments, the computing device 152 may be a laptop or notebook computer or other device. In this example, the structured light component 102 may record and provide object depth information that is used in conjunction with operation of the computing device 152. For example, user gestures may be recorded by the structured light component 102 to interact with visual content presented by the computing device 152. In particular, the structured light component 102 may form part of a natural user interface to select visual items, control program functions, or perform other operations in conjunction with content presented by the computing device 152.

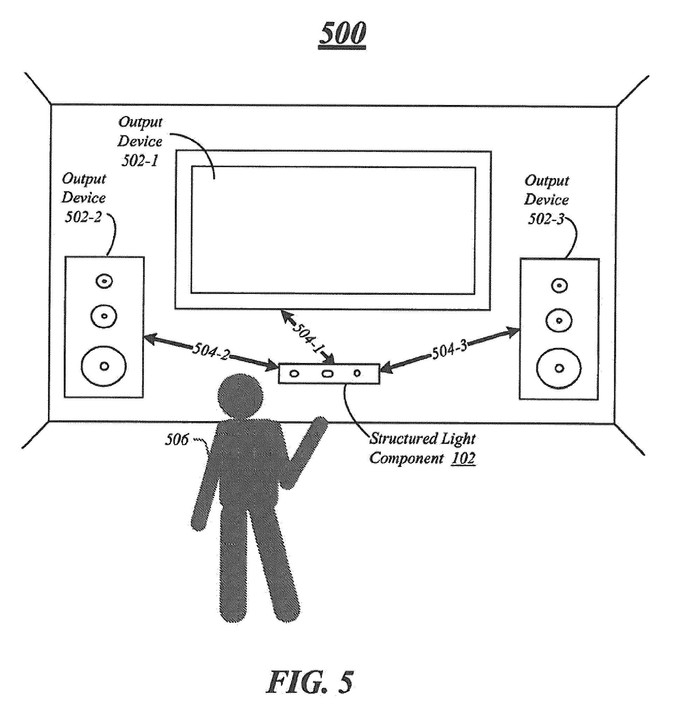

FIG. 5 depicts a system 500 that includes the structured light component 102 and various apparatus that interact with the structured light component 102. As illustrated, the output device 502-1, output device 502-2, and output device 502-3, are linked to the structured light component 102 via respective links 504-1, 504-2, and 504-3. In one example, the user 506 may interact with the structured light component 102 by performing various movements, gestures, which are sensed by the structured light component 102 and used to interact with content that may be presented on the output device 502-1 in one example. Because the structured light component 102 may provide object depth information over a wide range of depth, such as a range that spans 10-150 cm distance from the structured light component 102, the user may perform movements within a wide depth range that can be recorded and interpreted by the system 500.

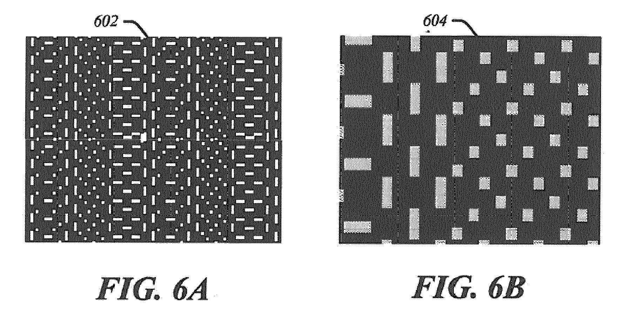

FIG. 6A depicts one example of a high resolution optical pattern 602 and FIG. 6B presents an example of a low resolution optical pattern 604, each of which may be generated by a structured light component of the present embodiments. In various embodiments, the high resolution optical pattern 602 and low resolution optical pattern 604 may be generated by the same emitter or by separate emitters. Turning again to FIG. 1, in one example, the high resolution optical pattern 602 may be generated by the first emitter 104 while the low resolution optical pattern 604 may be generated by the second emitter 106. Consistent with various embodiments, the high resolution optical pattern 602 and low resolution optical pattern 604 may be generated simultaneously such that both patterns are projected onto an object or set of objects simultaneously when the objects are located within a projection range of the first emitter 104 and second emitter 106. In this manner the reflection of the high resolution pattern 602 and low resolution pattern 604 from a given object or set of objects may be detected simultaneously and used to extract object depth information within the depth range covered by the combination of the high resolution optical pattern 602 and low resolution optical pattern 604. In one specific example, the high resolution pattern 602 may have three times greater resolution than the low resolution pattern 604 and may include nine times as many optical features per unit area as that of the low resolution pattern 604.

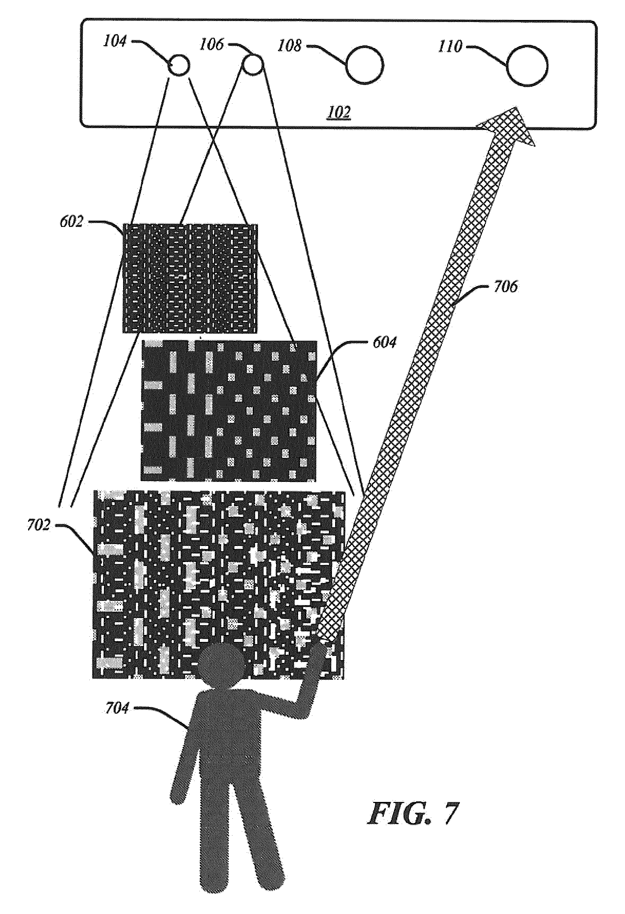

FIG. 7 depicts one use scenario in which a user 704 interacts with the structured light component 102. As illustrated in this scenario the emitter 104 projects the high resolution optical pattern 602 while the emitter 106 projects the low resolution optical pattern 604. As further depicted in FIG. 7, after projection from the respective emitters 104, 106 the high resolution optical pattern 602 and low resolution optical pattern 604 overlap to form the composite optical pattern 702.

In some embodiments, the emitter 104 and emitter 106 may be closely spaced within the structured light component 102. For example the separation of emitter 104 and emitter 106 may be about 1 cm to a few cm. In this manner, the optical pattern 602 and optical pattern 604 may substantially overlap at distances of several centimeters or greater from the structured light component 102. Thus, any objects located at a distance of greater than several centimeters from the structured light component 102 may be illuminated with a composite optical pattern 702 that does not substantially vary in pattern with increased distance from the structured light component 102.

When the composite optical pattern 702 is intercepted by the user 704, light from the composite optical pattern 702 may reflect from the user 704 and generate a composite image. In FIG. 7 a composite image is shown as the reflected optical pattern 706 that is intercepted by the sensor 110. Because the sensor 110 may include a 2-dimensional array of elements or sub-sensors, the reflected optical pattern 706 may be sensed as a two dimensional pattern of varying light intensity according to the exact variation in light produced when the composite optical pattern 702 reflects from the hand of user 704.

The reflected optical pattern 706 may be considered to be composed of a low resolution optical reflection pattern that results from reflection of the optical pattern 604 and a high resolution optical reflection pattern that results from reflection of the optical pattern 602, each of which optical patterns forms a part of the actual optical pattern 702 that falls on the user 704. As discussed below, by separately extracting a low resolution component and a high resolution component of the reflected optical pattern 706, object depth information over different depth ranges may be determined at the same time.

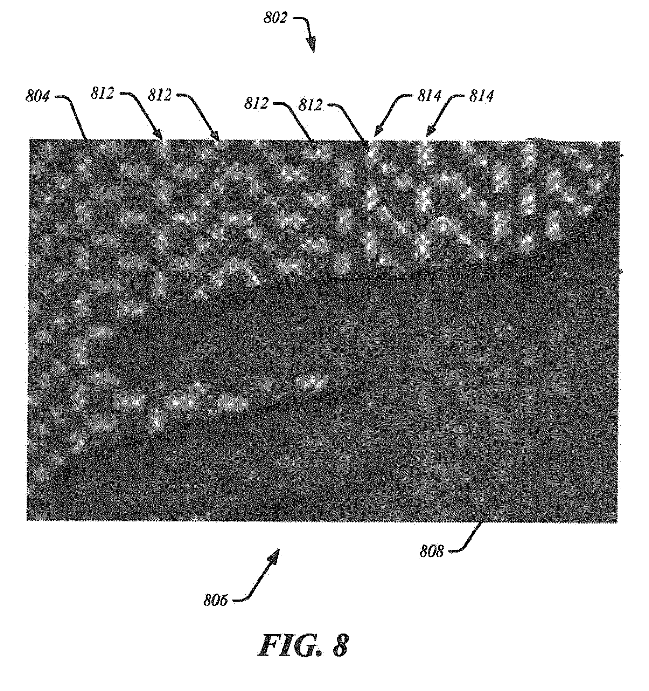

In accordance with a various embodiments, FIG. 8 depicts an image of a light pattern produced by a structured light component from the point of view of a sensor, which may correspond generally to the scenario depicted in FIG. 7. As illustrated, a composite image 802 forms when a composite optical pattern 804 reflects from surfaces including the hand 806 of user 704. The composite optical pattern 804 may be formed similarly to the composite optical pattern 702 described above. As illustrated in areas outside of the user hand 806, a generally undistorted pattern is shown in the composite optical pattern 804. In areas that reflect from the user hand 806, a composite image is formed as shown by the reflected optical pattern 808. As evident from FIG. 8, the reflected optical pattern 808 represents a distortion of the composite optical pattern 804, due to the reflection from the surface of the user hand 806, which may vary in opacity, in surface orientation, and vary in depth from a sensor, among other factors.

This distortion of the composite optical pattern 804 produced in the reflected optical pattern 808 may be employed to determine user gestures, depth information, movement and related information over a range of depths when the user's hand 806 moves in front of the structured light component 102. At various depths or distances from the structured light component 102 when the reflected optical pattern 808 is received and analyzed, different components of the reflected optical pattern 808 may be employed to extract information. For example, at close range, such as distances (depths) between about 10 and 50 cm, portions of the reflected optical pattern 808 generated by the emitter 104 may be extracted and analyzed to determine appropriate information. At further distances, such as between about 50 to 150 cm from the structured light component, portions of the reflected optical pattern 808 generated by the emitter 106 may be extracted and analyzed to determine appropriate information.

In order to separate out low resolution and high resolution optical reflection patterns from one another, filtering or other image processing may be employed. For example, the reflected optical pattern 808 may be subjected to high pass filtering to extract a high resolution optical reflection pattern (not separately shown) from the reflected optical pattern 808. This high resolution optical reflection pattern may then be compared or matched using known techniques to the optical pattern 602, which may be prestored in memory 126, in order to determine object depth information for objects within a depth range of about 50 to 150 cm, for example.

The reflected optical pattern 808 may be further subjected to low pass filtering to extract a low resolution optical reflection pattern (not separately shown) from the reflected optical pattern 808. This low resolution optical reflection pattern may then be compared using known techniques to the optical pattern 604, which may be prestored in the memory 126, in order to determine object depth information for objects within a depth range of about 10 to 50 cm, for example.

In one specific example, after the reflected optical pattern 808 is subjected to low pass-filtering, the low pass-filtered image (that is, the low-pass filtered optical pattern 808) can be downsampled in order to reduce the size of the filtered image. Subsequently, the low-pass filtered and downsampled image can be passed through a high pass filter to extract the final low resolution reflected optical pattern. This final low resolution reflection optical pattern may then be compared or "matched" to the projected low resolution optical pattern, that is, optical pattern 604, in order to extract information such as depth information over a depth range of 10 to 50 cm, for example.

In various embodiments, as shown also in FIG. 8, portions of a low resolution optical pattern may overlap with portions of a high resolution optical pattern to form a composite optical pattern. For example, the composite optical pattern 804 includes a pattern of small rectangles 812 generated by the high resolution optical pattern 602 and a pattern of larger rectangles 814 generated by the low resolution optical pattern 604. In some cases, as illustrated, the small rectangles 812 are superimposed on the larger rectangles 814. However, filtering as described above may be effective to extract a separate high resolution optical reflection pattern and a separate low resolution optical reflection pattern from the composite optical pattern 804, especially from the reflected optical pattern 808.

In embodiments of a structured light component having two or more separate emitters, power sent to one or more emitters may be different depending on the use scenario. For example, turning again to FIG. 7, the emitter 106 may be powered by a much weaker signal than that of the emitter 104. This is because the power required to generate the low resolution image 604 may be much less than that required to generate the high resolution image 602. In particular, the low resolution image 604 may require less power because the light pattern of the low resolution image 604 is meant to illuminate objects at close range, such as less than or equal to about 50 cm from the emitter 106. Moreover, since signal strength detected by the sensor 110 is inversely related to the square of distance from object to sensor 110, much less reflected light may be required for detection from objects located closer to the structured light component 102.

This ability to power the emitter 106 with a lower power signal enables not only overall savings in power to the structured light component 102, but also reduces the interference of a low resolution reflection optical pattern upon the high resolution reflection optical pattern of a composite signal, which may have a relatively higher intensity.

In addition, consistent with the present embodiments, a high resolution reflection optical pattern may present little interference with a low resolution optical signal, since the former is a high frequency signal and the low pass filtering described hereinabove acts to blur this signal to a constant signal intensity. While the constant signal intensity may increase the photonic noise, which tends to degrade the fidelity of a low resolution reflection optical pattern, the application of a strong low pass filter to the reflected optical pattern reduces the noise without degrading performance.

In various additional embodiments, when all objects of interest are close to camera structured light component, a high resolution emitter, such as the emitter 104, may be turned off by a switch (not shown) or other mechanism to obtain significant reduction of power consumption.

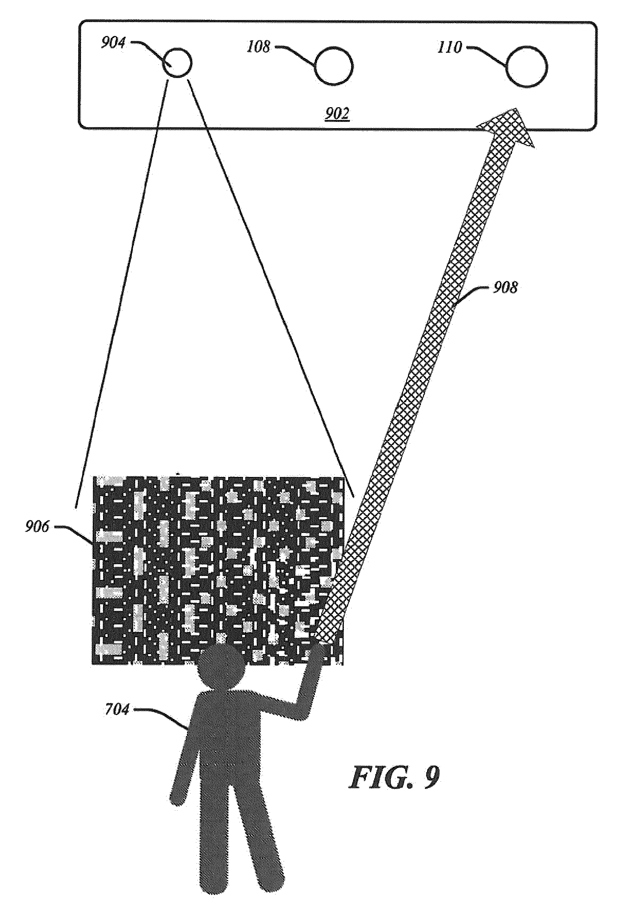

FIG. 9 shows another embodiment of a structured light component 902. In this embodiment, the structured light component 902 contains a single emitter 904, which may generate a composite optical pattern 906 in one example. The composite pattern 906 may be composed of two or more patterns including: a first optical pattern that contains large optical features separated by a relatively larger distance and designed to extract depth information from objects over a range of distances that are relatively closely spaced from the structured light component 902; a second optical pattern that contains optical features smaller than those of the first pattern and separated by a relatively smaller distance than the separation of optical features in the first optical pattern and designed to extract depth information from objects over a range of distances that are relatively more distantly spaced from the structured light component 902; an optional third optical pattern that contains optical features smaller than those of the second optical pattern and separated by a relatively greater distance than the separation of optical features in the first pattern and designed to extract depth information from objects over a range of distances that are still more distantly spaced from the structured light component 902 than those of the second optical pattern; and so forth. When the composite optical pattern 906 is reflected from the user 704, the reflected optical pattern 908 is detected by the sensor 110. Subsequently, as generally described above with respect to FIGs. 6A to 8, two or more optical reflection patterns may be extracted from the reflected optical pattern 908, and may be used to generate depth information over two or more depth ranges.

In still further embodiments, a structured light component may include two or more sensors that are arranged to detect a composite image that contains two or more reflected optical patterns. Signals from the two or more sensors may be processed in order to extract the two or more reflection optical patterns, from which depth information over respective two or more depth ranges is obtained.

Included herein is a set of flow charts representative of exemplary methodologies for performing novel aspects of the disclosed architecture. While, for purposes of simplicity of explanation, the one or more methodologies shown herein, for example, in the form of a flow chart or flow diagram, are shown and described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

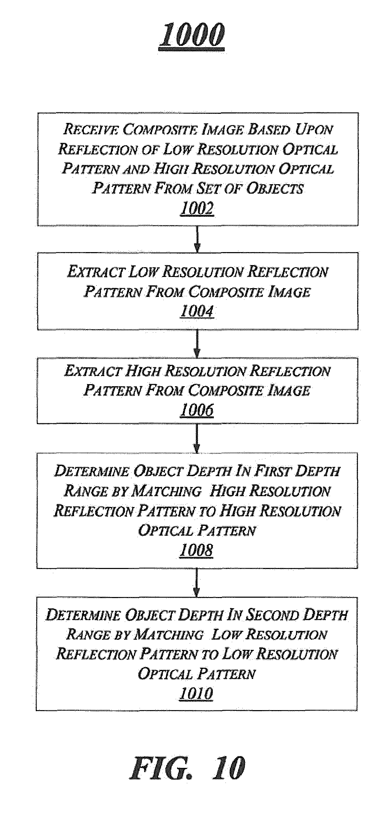

FIG. 10 depicts an exemplary first logic flow 1000. The logic flow 1000 may be implemented, for example, by a structured light device to obtain depth information from one or more objects. At block 1002, a composite image based upon reflection from a set of objects of a low resolution optical pattern and high resolution optical pattern is received. At block 1004 a low resolution optical reflection pattern is extracted from the composite image. At block 1006, a high resolution pattern is extracted from the composite image. At block 1008, object depth is determined in a first depth range by matching the high resolution optical reflection pattern to the high resolution optical pattern. At block 1010, object depth in a second depth range is determined by matching the low resolution optical reflection pattern to the low resolution optical pattern.

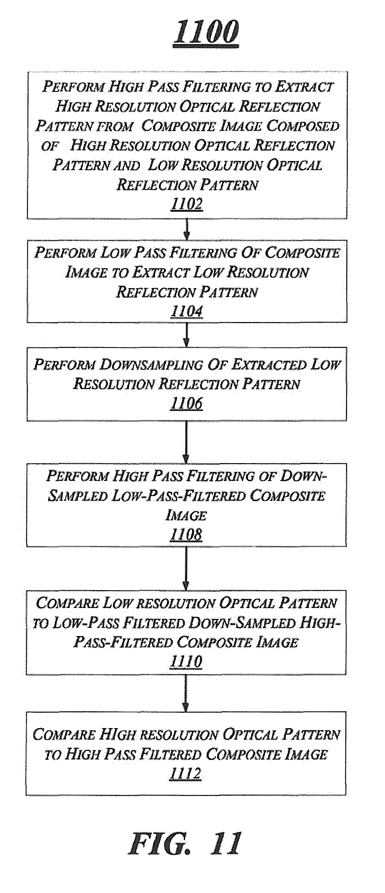

FIG. 11 depicts an exemplary second logic flow 1100. This logic flow may be implemented, for example, by a structured light system, such as the system 120. At block 1102, a high pass filtering process is applied to extract a high resolution optical reflection pattern from a composite image that is composed of a high resolution optical reflection pattern and a reflection pattern of a low resolution optical reflection pattern.

At block 1104, low pass filtering of the composite image is performed to extract the low resolution optical reflection pattern.

At block 1106, downsampling is performed on the low-pass filtered reflection pattern. At block 1108, high pass filtering process is applied to the downsampled low-pass filtered reflection pattern. At block 1110, the low resolution optical pattern is compared to the high pass filtered downsampled low pass-filtered reflection pattern. At block 1112, the high resolution optical pattern is compared to the high pass filtered reflection pattern.

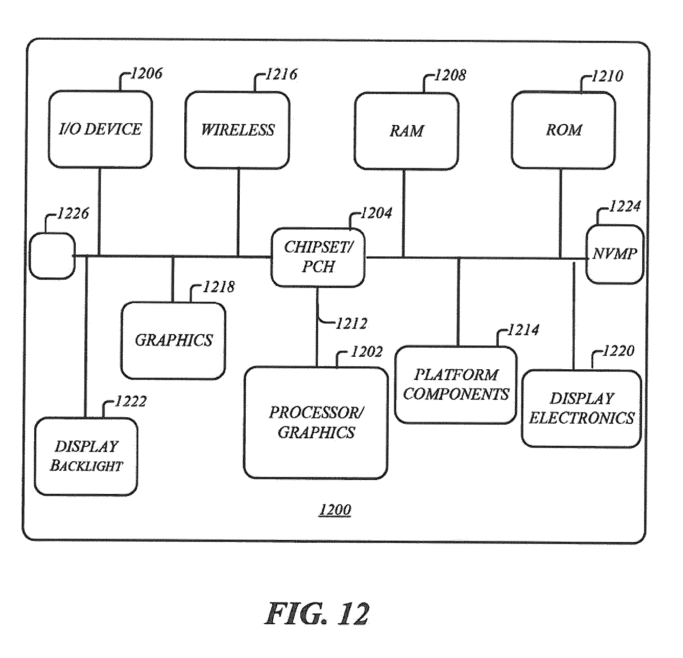

FIG. 12 is a diagram of an exemplary system embodiment and in particular, FIG. 12 is a diagram showing a platform 1200, which may include various elements. For instance, FIG. 12 shows that platform (system) 1200 may include a processor/graphics core 1202, a chipset/platform control hub (PCH) 1204, an input/output (I/O) device 1206, a random access memory (RAM) (such as dynamic RAM (DRAM)) 1208, and a read only memory (ROM) 1210, display electronics 1220, display backlight 1222, and various other platform components 1214 (e.g., a fan, a crossflow blower, a heat sink, DTM system, cooling system, housing, vents, and so forth). System 1200 may also include wireless communications chip 1216 and graphics device 1218. The embodiments, however, are not limited to these elements.

As shown in FIG. 12, I/O device 1206, RAM 1208, and ROM 1210 are coupled to processor 1202 by way of chipset 1204. Chipset 1204 may be coupled to processor 1202 by a bus 1212. Accordingly, bus 1212 may include multiple lines.

Processor 1202 may be a central processing unit comprising one or more processor cores and may include any number of processors having any number of processor cores. The processor 1202 may include any type of processing unit, such as, for example, CPU, multi-processing unit, a reduced instruction set computer (RISC), a processor that have a pipeline, a complex instruction set computer (CISC), digital signal processor (DSP), and so forth. In some embodiments, processor 1202 may be multiple separate processors located on separate integrated circuit chips. In some embodiments processor 1202 may be a processor having integrated graphics, while in other embodiments processor 1202 may be a graphics core or cores.

The following examples pertain to further embodiments.

Example 1 is an apparatus for determining object depth, comprising an emitter to project a low resolution optical pattern and a high resolution optical pattern having a finer resolution than the low resolution optical pattern, a sensor to detect a composite image, the composite image comprising a low resolution optical reflection pattern comprising reflection of the projected low resolution optical pattern and a high resolution optical reflection pattern comprising a reflection of the projected high resolution optical pattern, and logic to determine object depth in a first depth range and object depth in a second depth range based upon the detected composite image.

In Example 2, the low resolution optical pattern of Example 1 may optionally be for determining object depth between 10 and 50 cm from the sensor, and the high resolution optical pattern may be for determining object depth between 50 and 150 cm from the sensor.

In Example 3, the emitter of any one of Examples 1-2 can optionally include a first emitter to project the low resolution optical pattern at a first signal power and a second emitter to project the high resolution optical pattern at a second signal power higher than the first signal power.

In Example 4, the apparatus of any one of Examples 1-3 can optionally include a high pass filter to extract the high resolution optical reflection pattern from the composite image, and a low pass filter to extract the low resolution optical reflection pattern from the composite image.

In Example 5, the logic of any one of Examples 1-4 can optionally determine object depth in a first depth range by matching the low resolution optical reflection pattern to the low resolution optical pattern, and determine object depth in a second depth range by matching the high resolution optical reflection pattern to the high resolution optical pattern.

In Example 6, the logic of any one of Examples 1-5 can optionally perform downsampling on the extracted low resolution optical reflection pattern.

In Example 7, the emitter of any one of Examples 1-6 can optionally emit the respective low resolution and high resolution optical patterns simultaneously.

In Example 8, the low resolution optical pattern of any one of Examples 1-7 and high resolution optical pattern may optionally comprise infrared radiation.

In Example 9, the apparatus of any one of Examples 1-8 can optionally include a switch to disable the high resolution emitter.

In Example 10, the sensor of any one of Examples 1-9 can optionally record a series of composite images at a frame rate of 30 frames per second or greater.

In Example 11, the emitter of any one of Examples 1-10 can optionally project an in-termediate resolution optical pattern, the sensor can detect an intermediate resolution optical reflection pattern comprising reflection of the intermediate range optical pattern in the composite image, and the logic can determine object depth in a third depth range based upon the detected composite image, the third depth range intermediate between the first and second depth range.

In Example 12, the apparatus of any one of Examples 1-11 can optionally include a red-green-blue (RGB) digital camera to record a visible image simultaneously with detection of the composite image by the sensor.

In Example 13, at least one computer-readable storage medium includes instructions that, when executed, cause a system to receive a composite image comprising a low resolution reflection pattern formed from reflection of a low resolution optical pattern and a high resolution reflection pattern formed from reflection of a high resolution optical pattern having finer resolution than the low resolution optical pattern, to determine object depth in a first depth range based upon the high resolution optical reflection pattern, and to determine object depth in a second depth range based upon the high resolution optical reflection pattern.

In Example 14, the low resolution optical pattern of Example 13 may optionally be for determining object depth between 10 and 50 cm, and the high resolution optical pattern for de-termining object depth between 50 and 150 cm.

In Example 15, the low resolution optical pattern of any one of Examples 13-14 may optionally include an optical pattern projected at a first signal power, and the high resolution optical pattern comprising an optical pattern projected at a second signal power higher than the first signal power.

In Example 16, the at least one computer-readable storage medium of any one of Examples 13-15 may optionally include instructions that, when executed, cause the system to generate a first filter to extract the high resolution optical reflection pattern from the composite image, and generate a second filter to extract the low resolution optical reflection pattern from the composite image.

In Example 17, the at least one computer-readable storage medium of any one of Examples 13-16 may optionally include instructions that, when executed, cause the system to determine object depth in a first depth range by matching the low resolution reflection pattern to the low resolution optical pattern and determine object depth in a second depth range by matching the high resolution reflection pattern to the high resolution optical pattern.

In Example 18, the at least one computer-readable storage medium of any one of Examples 13-17 may optionally include instructions that, when executed, cause the system to perform downsampling on the extracted low resolution optical pattern.

In Example 19, the at least one computer-readable storage medium of any one of Examples 13-18 may include instructions that, when executed, cause the system to emit the respective low resolution and high resolution images simultaneously.

In Example 20, the low resolution optical pattern and high resolution optical pattern of any one of Examples 13-19 may comprise infrared radiation.

In Example 21, the at least one computer-readable storage medium of any one of Examples 13-20 may optionally include instructions that, when executed, cause the system to receive a series of composite images at a frame rate of 30 frames per second or greater.

In Example 22, the at least one computer-readable storage medium of any one of Examples 13-21 may optionally include instructions that, when executed, cause the system to receive an intermediate resolution optical pattern comprising reflection of the intermediate range optical pattern in the composite image, and determine object depth in a third depth range based upon the detected composite image.

In Example 23, a computer implemented method may include receiving a composite image comprising a low resolution reflection pattern formed from reflection of a low resolution optical pattern and a high resolution reflection pattern formed from reflection of a high resolution optical pattern having finer resolution than the low resolution optical pattern, determining object depth in a first depth range based upon the high resolution reflection pattern, and determining object depth in a second depth range based upon the high resolution reflection pattern.

In Example 24, the resolution optical pattern of Example 23 may optionally be for determining object depth between 10 and 50 cm, and the high resolution optical pattern for determining object depth between 50 and 150 cm.

In Example 25, the resolution optical pattern of any one of Examples 23-24 may optionally comprise an optical pattern projected at a first signal power, and the high resolution optical pattern may optionally comprise an optical pattern projected at a second signal power higher than the first signal power.

In Example 26, the computer implemented method of any one of Examples 23-25 may optionally include generating a first filter to extract the high resolution optical reflection pattern from the composite image, and generating a second filter to extract the low resolution optical reflection pattern from the composite image.

In Example 27, the computer implemented method of any one of Examples 23-26 may optionally include determining object depth in a first depth range by matching the low resolution reflection pattern to the low resolution optical pattern, and determining object depth in a second depth range by matching the high resolution reflection pattern to the high resolution optical pattern.

In Example 28, the computer implemented method of any one of Examples 23-27 may optionally include performing downsampling on the extracted low resolution optical pattern.

In Example 29, the computer implemented method of any one of Examples 23-28 may optionally include emitting the respective low resolution and high resolution images simultaneously.

In Example 30, the computer implemented method of any one of Examples 23-29 may optionally include receiving a series of composite images at a frame rate of 30 frames per second or greater.

In Example 31, an apparatus may optionally include means to perform the method of any one of the Examples 23-30.

In Example 32, at least one machine readable medium may optionally include a plurality of instructions that in response to being executed on a computing device, cause the computing device to carry out a method according to any one of the Examples 23-31.

In Example 33, an active depth camera may include an emitter system comprising a first emitter having a first depth of field and a second emitter having a second depth of field greater than the first depth of field, the emitter system to project a composite optical pattern comprising a low resolution and high resolution optical pattern, a sensor system to detect a composite image that contains a low resolution optical reflection pattern comprising reflection of the projected low resolution optical pattern, and further contains a high resolution optical reflection pattern comprising a reflection of the projected high resolution optical pattern, and logic to determine object depth in a first depth range and object depth in a second depth range based upon the detected composite image.

In Example 34, the low resolution optical pattern of Example 33 may optionally be for determining object depth between 10 and 50 cm from the sensor, and the high resolution optical pattern for determining object depth between 50 and 150 cm from the sensor.

In Example 35, the emitter system of any one of Examples 33-34 may include a first emitter to project the low resolution optical pattern at a first signal power, and a second emitter to project the high resolution optical pattern at a second signal power higher than the first signal power.

In Example 36, the active depth camera of any one of Examples 33-35 may optionally include a high pass filter to extract the high resolution optical reflection pattern from the composite image, and a low pass filter to extract the low resolution optical reflection pattern from the composite image.

In Example 37, the logic of any one of Examples 33-36 may optionally determine object depth in a first depth range by matching the low resolution optical reflection pattern to the low resolution optical pattern; and determine object depth in a second depth range by matching the high resolution optical reflection pattern to the high resolution optical pattern.

In Example 38, the emitter system of any one of Examples 33-37 may optionally include a single emitter to emit the respective low resolution and high resolution optical patterns simultaneously.

In Example 39, the sensor system of any one of Examples 33-38 may optionally record a series of composite images at a frame rate of 30 frames per second or greater.

In Example 40, the emitter system of any one of Examples 33-39 may optionally project an intermediate resolution optical pattern, the sensor system may detect an intermediate resolution optical reflection pattern comprising reflection of the intermediate range optical pattern in the composite image, and the logic may determine object depth in a third depth range based upon the detected composite image, the third depth range intermediate between the first and second depth range.

In Example 41, the active depth camera of any one of Examples 33-40 may include a red-green-blue (RGB) digital camera to record a visible image simultaneously with detection of the composite image by the sensor.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Some embodiments may be implemented, for example, using a computer-readable medium or article which may store an instruction or a set of instructions that, if executed by a computer, may cause the computer to perform a method and/or operations in accordance with the embodiments. Such a computer may include, for example, any suitable processing platform, computing platform, computing device, processing device, computing system, processing system, computer, processor, or the like, and may be implemented using any suitable combination of hardware and/or software. The computer-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

## Claims

1. An apparatus for determining object depth, comprising:
an emitter (104, 106) to project a low resolution optical pattern (604) and a high resolution optical pattern (602) having a finer resolution than the low resolution optical pattern;
a sensor (110) to detect a composite image, the composite image (702) comprising a low resolution optical reflection pattern comprising reflection of the projected low resolution optical pattern and a high resolution optical reflection pattern comprising a reflection of the projected high resolution optical pattern; and
logic (124) to determine object depth in a first depth range and object depth in a second depth range based upon the detected composite image.

2. The apparatus of claim 1,
the low resolution optical pattern for determining object depth between 10 and 50 cm from the sensor; and
the high resolution optical pattern for determining object depth between 50 and 150 cm from the sensor.

3. The apparatus of claim 1 or 2, the emitter comprising a first emitter (106) to project the low resolution optical pattern at a first signal power and a second emitter (104) to project the high resolution optical pattern at a second signal power higher than the first signal power.

4. The apparatus according to any of the previous claims, comprising:
a high pass filter to extract the high resolution optical reflection pattern from the composite image; and
a low pass filter to extract the low resolution optical reflection pattern from the composite image.

5. The apparatus according to any of the previous claims, the logic to:
determine object depth in a first depth range by matching the low resolution optical reflection pattern to the low resolution optical pattern; and
determine object depth in a second depth range by matching the high resolution optical reflection pattern to the high resolution optical pattern.

6. The apparatus of claim 4 or 5, the logic to perform downsampling on the extracted low resolution optical reflection pattern.

7. The apparatus according to any of the previous claims, the emitter to emit the respective low resolution and high resolution optical patterns simultaneously.

8. The apparatus according to any of the previous claims, the low resolution optical pattern and high resolution optical pattern comprising infrared radiation.

9. A computer implemented method for determining object depth, comprising:
receiving a composite image comprising a low resolution reflection pattern formed from reflection of a low resolution optical pattern and a high resolution reflection pattern formed from reflection of a high resolution optical pattern having finer resolution than the low resolution optical pattern;
determining object depth in a first depth range based upon the high resolution reflection pattern; and
determining object depth in a second depth range based upon the high resolution reflection pattern.

10. The computer implemented method of claim 9, the low resolution optical pattern for determining object depth between 10 and 50 cm; and the high resolution optical pattern for determining object depth between 50 and 150 cm.

11. The computer implemented method of claim 9, the low resolution optical pattern comprising an optical pattern projected at a first signal power, and the high resolution optical pattern comprising an optical pattern projected at a second signal power higher than the first signal power.

12. The computer implemented method of claim 9 or 10, comprising:
determining object depth in a first depth range by matching the low resolution reflection pattern to the low resolution optical pattern; and
determining object depth in a second depth range by matching the high resolution reflection pattern to the high resolution optical pattern.

13. The computer implemented method of any of claims 9-12, comprising emitting the respective low resolution and high resolution images simultaneously.

14. An apparatus comprising means to perform the method of any one of the preceding claims.

15. At least one machine readable medium may comprise a plurality of instructions that in response to being executed on a computing device, cause the computing device to carry out a method according to any one of the preceding claims.
